(19) Europäisches Patentamt
European Patent Office
Office européen des brevets

(11) **EP 3 012 784 B1**

(12) **EUROPÄISCHE PATENTSCHRIFT**

(45) Veröffentlichungstag und Bekanntmachung des Hinweises auf die Patenterteilung:
**15.02.2017 Patentblatt 2017/07**

(51) Int Cl.:
*G06K 19/06* *(2006.01)*      *B42D 25/391* *(2014.01)*
*G11B 7/00* *(2006.01)*

(21) Anmeldenummer: **14190328.6**

(22) Anmeldetag: **24.10.2014**

(54) **Selektiv optisch auslesbarer Datenträger**

Selective optical data carrier

Support de données lisible optiquement, sélectivement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.04.2016 Patentblatt 2016/17**

(73) Patentinhaber: **Actilor Intellectual Asset AG**
**7208 Malans (CH)**

(72) Erfinder:
• **Ritter, Ulrich**
  **63667 Nidda-Schwickartshausen (DE)**

• **Schindler, Samuel**
  **7214 Grüsch (CH)**
• **Murvai, Geza**
  **04129 Leipzig (DE)**

(74) Vertreter: **Detken, Andreas**
**Isler & Pedrazzini AG**
**Gotthardstrasse 53**
**Postfach 1772**
**8027 Zürich (CH)**

(56) Entgegenhaltungen:
**WO-A1-2004/009373      DE-A1-102007 044 486**

**Beschreibung**

TECHNISCHES GEBIET

Die vorliegende Erfindung bezieht sich auf einen optisch auslesbaren Datenträger, der z.B. zur Identifikation oder Kennzeichnung eines Gegenstandes, insbesondere zur Sicherung von Dokumenten und Wertpapieren dienen kann, sowie Verfahren zur Herstellung und zum Auslesen eines solchen Datenträgers.

STAND DER TECHNIK

Hochgesicherte Dokumente in Form von Papierdokumenten wie Reisepässe, Banknoten und solche mit einem kartenförmigen Aufbau, aber auch Dokumente zum Schutz der Originalität eines Produktes wie Garantiezertifikate, Übereinstimmungserklärungen und Originalverpackungen beinhalten zum Schutz gegen Fälschungen, fehlerhafter Authentisierung oder Identifikation Sicherheitsfunktionen, im üblichen Sprachgebrauch genannt Sicherheitsmerkmale. Je nach Anforderungen an die Sicherheit werden mehrere Sicherheitsmerkmale in einem Dokument verwendet, die sich - aber nicht zwangsläufig - hinsichtlich ihrer Sicherheitsstufe und ihrer Funktion unterscheiden oder gegenseitig ergänzen. Bei den Sicherheitsstufen unterscheidet der Fachmann auf dem Gebiet der Sicherheitsdokumente die mit den unbewaffneten Sinnen erkennbaren Erststufenmerkmale, die in der Regel sichtbare Merkmale sind, z.B. ein Sicherheitsfaden oder ein Durchsichtsmerkmal (z.B. zwei komplementäre Bildhälften auf jeweils einer Seite des Dokumentes) sowie Zweitstufenmerkmale, die zur Erkennung einfacher Zusatzgeräte wie z.B. einer UV-Lampe oder eines Laserpointers, bedürfen, und schliesslich Drittstufenmerkmale, die einen grösseren Aufwand zum Nachweis verlangen. Drittstufenmerkmale setzen komplizierte Gerätschaften oder sogar eine forensisch ausgestattete Laborumgebung für deren Verifikation voraus. Die Sicherheitsmerkmale unterscheiden sich dabei nicht nur hinsichtlich der Zuverlässigkeit des Verifikationsprozesses, sondern auch hinsichtlich ihrer Aufgabe. Eine Authentisierung stellt die Echtheit des Dokumentes sicher und eine Identifizierung macht eine Aussage über Güter, Institute oder Personen, die mit dem Dokument verknüpft sind. Bei Reisepässen sind das beispielsweise die Dokumenteninhaber. Dementsprechend müssen Sicherheitsmerkmale entweder ein Sicherheitsdokument als solches sichern oder der Individualisierung (Personalisierung) dienen können. Je nach Typ des Merkmals ist sowohl eine massenhafte als auch eine individuelle Sicherung des Dokumentes möglich.

Besonders interessant sind hier solche Merkmale, die eine Funktion zur Datenspeicherung beinhalten. Datenspeicherfunktionen unterscheiden sich ihrerseits hinsichtlich der Qualität der Dokumentensicherheit. Magnetstreifen können beispielsweise als Datenspeicher dienen, sind aber leicht erkenn- und manipulierbar.

Elektronische Schaltkreise, z.B. RFID-Chips, besitzen ein deutlich höheres Sicherheitsniveau und setzen zur Datenspeicherung und Fälschung einen höheren apparativen Aufwand voraus, insbesondere dann, wenn der Zugang und die Daten selbst verschlüsselt sind. Auf hohem Niveau befinden sich solche Datenspeichermedien, die als solche zunächst nicht erkennbar sind und deren Funktion nur proprietären Schreib- und Lesegeräten zugänglich ist. Insbesondere wünschenswert sind Sicherheitsmerkmale, die das Potential besitzen, auf verschiedenen Sicherheitsstufen eingesetzt werden zu können. Beispielsweise können solche Merkmale einerseits für jeden Nutzer des Dokumentes durch einen besonderen Effekt wie etwa eine Metamerie oder als Hologramm visuell erkennbar sein, und andererseits können solche Merkmale verdeckt gespeicherte Daten enthalten. Multifunktionale Merkmale finden ihr Interesse nicht nur im Bereich der Authentisierung und Identifikation, sondern können auch Nebenfunktionen für kommerzielle Aufgaben oder Track & Trace-Funktionen beinhalten. Je nach Funktionsumfang von Sicherheitsmerkmalen spricht man auch von intelligenten Merkmalen. Für solche Merkmale besteht auf dem Gebiet der Hochsicherheitsdokumente eine besondere Nachfrage.

Eine Sicherung der Authentizität von Gegenständen basierend auf einem lichtinduzierten Farbwechsel des Retinalproteins Bacteriorhodopsin (BR) ist wohlbekannt und Gegenstand einer ganzen Reihe von Patentdokumenten, z.B. der Dokumente EP-A-0406850, EP-A-0487099, EP-A-0655162, EP-A-0532029, EP-A-1171309, EP-A-1459301 und der darin angegebenen Hintergrunddokumente. BR zeigt diesen Farbwechsel nur in membrangebundener Form; im Zusammenhang mit BR spricht man von Purpurmembran (PM). In der PM bildet das BR Trimere, die als ein hexagonaler zweidimensionaler Kristall angeordnet sind. BR in PM zeigt in einer geeigneten Zubereitung einen Photozyklus, der einen reversiblen, lichtinduzierbaren Farbwechsel von Violett (im Dunkeln oder nach "Zurücksetzen" mittels blauem Licht) nach Senfgelb (nach Belichten mit weißem oder grünem Licht) beinhaltet. Dieser Farbwechsel ist nicht nachahmbar und kann zum Schutz vor Fälschungen aller Art dienen. Das BR kann als Wildtyp oder als Mutante (einfache oder mehrfache Mutationen in der primären Aminosäuresequenz) vorliegen; es kann auch anderweitig verändert sein, z.B. durch Veränderung des Retinalmoleküls. PM kann in Form von Zellmembran-Fragmenten vorliegen. Die Zellmembran-Fragmente sind flächige Stücke von üblicherweise wenigen Mikrometern Länge und Breite und von ca. 5 Nanometern Dicke.

Zusätzlich weist BR Zustände ausserhalb des Photozyklus auf, die für die Verwendung von BR-PM-Applikationen als optischer Datenspeicher von besonderem Interesse sind. Durch intensive Bestrahlung mit geeignetem Laserlicht erfolgt auf dem Wege eines Zweiphotonenprozesses eine Zustandsänderung in einen ausserhalb des normalen Fotozyklus befindlichen Zustand (LIMB = laserinduzierte blaue Membran), der bei weiterer Bestrahlung ein Übergang in einen gelblichen Endzustand (TPP-Produkt = twophoton photo bleaching product) folgt. Diese Zustandsänderung ist irreversibel. Die BR-Moleküle im Endzustand nehmen am Photozyklus nicht mehr teil, sie sind permanent gebleicht.

Eine Voraussetzung für die Datenspeicherung mit BR-PM-Applikationen ist eine dauerhafte räumliche Fixierung der BR-Molekülcluster, z.B. durch Einbettung in ein geeignetes Matrixmaterial. In einer derart fixierten BR-PM-Schicht weisen die BR-Moleküle eine isotrope Verteilung von räumlichen Orientierungen auf und sind in diesen Orientierungen räumlich fixiert. Durch Einstrahlen von genügend intensivem Licht geeigneter Wellenlänge in ein Flächenelement einer solchen BR-PM-Schicht können Flächenelemente selektiv irreversibel gebleicht werden. Bei Beobachtung mit Weisslicht geringer Intensität erscheint ein gebleichtes Flächenelement gelblich bis farblos, während ein nicht gebleichtes Flächenelement violett erscheint und ggfs. einen Farbwechsel nach gelb zeigt.

Dies kann zur Datenspeicherung wie folgt ausgenutzt werden: Die BR-Schicht wird in Flächenelemente aufgeteilt, wobei jedes Flächenelement einem Bit entspricht. Ein gebleichtes Flächenelement entspricht dem Zustand "1" und ein ungebleichtes Flächenelement dem Zustand "0" (oder umgekehrt). Auf diese Weise kann die BR-Schicht als optischer WORM-Speicher genutzt werden. Dies wird z.B. in Fischer et al. [T. Fischer, M. Neebe, T- Juchem und N. Hampp, "Biomolecular optical data storage and data encryption", IEEE Transactions on NanoBiosciences 2003, 2, 1-5] beschrieben.

Die Speicherkapazität jedes Flächenelements beträgt bei diesem Verfahren genau ein Bit. Diese Speicherkapazität kann aber erhöht werden, indem die Informationen unter Polarisationserhalt eingeschrieben und mit polarisiertem Licht ausgelesen werden (sogenanntes Polarisationsmultiplexing). Wenn ein Flächenelement einer BR-PM-Schicht mit polarisiertem Laserlicht gebleicht wird, werden bevorzugt diejenigen BR-Moleküle in den TPP-Zustand überführt, deren Chromophor (Retinal) eine bestimmte räumliche Orientierung aufweist, nämlich mit seiner langen Achse im Wesentlichen parallel zur Polarisationsrichtung des Laserlichts liegt. BR-Moleküle, deren Chromophor eine genügend stark abweichende Orientierung aufweist, nehmen nicht oder nur zu einem sehr viel geringeren Anteil an dem Zweiphotonen-Bleichprozess teil und bleiben grösstenteils unverändert. Da es sich beim Bleichprozess um einen Zweiphotonenprozess handelt, der nur eintritt, wenn ein gewisser Schwellwert der Lichtintensität überschritten wird, kann durch geeignete Wahl der eingestrahlten Lichtintensität erreicht werden, dass die Winkelverteilung der gebleichten BR-Moleküle relativ eng wird.

Durch das polarisationsabhängige Bleichen entsteht eine optische Anisotropie in der Ebene der BR-Schicht: Wenn ein derart gebleichtes Flächenelement mit polarisiertem Weisslicht derselben Polarisation wie das zum Bleichen verwendete Licht beobachtet wird, erscheint das betreffende Flächenelement gelblich bis farblos, also gebleicht. Wenn dasselbe Flächenelement aber mit polarisiertem Weisslicht der dazu orthogonalen Polarisationsrichtung beobachtet wird, zeigt sich die violette Farbe des ungebleichten BR und bei geeigneter Zusammensetzung (Mutante, pH) kann auch der normale Photozyklus beobachtet werden, d.h. das Flächenelement erscheint violett und ändert ggfs. seine Farbe bei hinreichend starker Beleuchtung reversibel nach senfgelb. Die Eigenschaft "Farbe" bzw. "Farbwechsel" ist also durch das Bleichen optisch anisotrop geworden.

Dies kann zur optischen Datenspeicherung wie folgt ausgenutzt werden: Ein erstes Bit wird mit einer ersten Polarisationsrichtung in ein Flächenelement eingeschrieben, wobei für dieses Datenbit ein mit der ersten Polarisationsrichtung gebleichtes Flächenelement dem Zustand "1" und ein ungebleichtes Flächenelement dem Zustand "0" entspricht (oder umgekehrt). Zudem wird ein zweites Datenbit mit einer zweiten Polarisationsrichtung (z.B. der zur ersten Polarisationsrichtung orthogonalen Polarisationsrichtung) in dasselbe Flächenelement eingeschrieben. Das erste Datenbit kann mit Beobachtungslicht der ersten Polarisationsrichtung ausgelesen werden, das zweite Datenbit mit Beobachtungslicht der zweiten Polarisationsrichtung. Es erfolgt also ein Polarisationsmultiplexing, wobei pro Flächenelement ein Multiplexing mit zwei Polarisationsrichtungen stattfindet. Die oben stehenden Überlegungen lassen sich auf mehr als zwei Polarisationsrichtungen verallgemeinern.

Relevanter Hintergrund hierzu findet sich in der Dissertation von Martin Imhof [Martin Imhof, "Polarisationsdatenspeicherung in Bakteriorhodopsin-Schichten", Dissertation Universität Marburg 2012].

Die DE 101 63 428 A1 offenbart ebenfalls einen optischen Datenspeicher mit einem lichtempfindlichen Speichermedium, das fotoinduzierbare Anisotropie aufweist. Hier erfolgt die Codierung der Daten jedoch anders als bei dem oben dargestellten Verfahren: Bleichen mit einer ersten Polarisationsrichtung entspricht hier dem Wert "1", und Bleichen mit einer dazu orthogonalen Polarisationsrichtung entspricht dem Wert "0". Es wird also zwischen den Zuständen "nicht beschrieben", "beschrieben mit Wert 1", "beschrieben mit Wert 0" und "überschrieben" (d.h. mit beiden Polarisationsrichtungen beschrieben) unterschieden. Dies wird für ein Verschlüsselungsverfahren ausgenutzt. Bei Verwendung von mehr als zwei Polarisationsrichtungen können entsprechend nichtbinäre Daten, d.h. Daten mit einer anderen Basis als 2, gespeichert werden, bei einer Verwendung von 16 unterschiedlichen Polarisationsrichtungen z.B. Hexadezimalzahlen, wobei jede der 16 Polarisationsrichtungen einem hexadezimalen Zahlenwert entspricht. Ein Polarisationsmultiplexing erfolgt jedoch nicht.

In Koek et al. [W. D. Koek, N. Bhattacharya, J. J. M. Braat, V. S. S. Chan and J. Westerweel, Optics Letters, Vol. 29, Issue 1, p. 101-103 (2004)] wird mit Hilfe der lichtinduzierten Anisotropie von BR ein Polarisationshologramm erzeugt, mit welchem mittels Polarisationsmultiplexing zwei unabhängige Bilder innerhalb eines einzelnen BR-Films simultan ausgelesen werden können. Dabei werden allerdings nur BR-Zustände innerhalb des normalen Photozyklus verwendet, d.h. das Hologramm hat nur eine begrenzte Lebensdauer, die bei der verwendeten BR-Mutante D96N nur gut eine Minute beträgt.

Ein Lichtmodulator mit einer durch Steuerlicht optisch aktivierbaren photochromen Schicht zur Modulation von Signallicht ist aus der DE 198 31 777 A1 bekannt. Der Lichtmodulator weist eine das Steuerlicht wellenlängenselektiv reflektierende Filterschicht auf, um Steuerlicht, das die photochrome Schicht durchdrungen hat, zurück zu reflektieren. Dadurch kann Information aus dem Steuerlicht flächig und zeitlich variabel auf das Signallicht übertragen werden.

Ein rein auf der optischen Datenspeicherung basierendes Merkmal auf der Basis von Bacteriorhodopsin kann zwar über die darin gespeicherte Information eine weitere unabhängige, der Fälschungssicherheit dienende Information enthalten, die gesamte Information ist aber im Grunde offen zugänglich.

Die DE 10 2007 044 486 A1 offenbart ein Sicherheitselement, das einen Barcode mit Datenfeldern aufweist, die durch eine Flüssigkristallschicht mit polarisierenden Flüssigkristallen gebildet werden. Die Flüssigkristallschicht und der daraus gebildete Barcode sind für das unbewaffnete Auge farblos transparent. Durch Beobachtung durch einen Polarisationsfilter hindurch oder durch Einstrahlung von polarisiertem Licht kann der Barcode sichtbar gemacht werden.

Die WO 2004/009373 A1 offenbart ein Sicherheitsmerkmal, das eine Bedruckung aufweist, die elektromagnetische Strahlung ausserhalb des sichtbaren Bereichs in sichtbares Licht umwandelt. Diese Bedruckung ist mit einer Polarisationsfolie überdeckt. Die Polarisationsfolie kann Bereiche unterschiedlicher Polarisationsrichtungen aufweisen.

DARSTELLUNG DER ERFINDUNG

Es ist eine Aufgabe der vorliegenden Erfindung, einen Datenträger zur Speicherung optisch auslesbarer Informationen anzugeben, bei dem zumindest ein Teil der auf dem Datenträger gespeicherten Informationen für einen Beobachter verborgen sind.

Die Aufgabe wird durch einen Datenträger mit den Merkmalen des Anspruchs 1 gelöst. Weitere Ausführungsformen sind in den abhängigen Ansprüchen gegeben.

Es ist eine weitere Aufgabe der vorliegenden Erfindung, ein Verfahren zur Datenspeicherung mit einem solchen Datenträger anzugeben. Diese Aufgabe wird durch ein Verfahren nach Anspruch 9 gelöst.

Die vorliegende Erfindung stellt einen Datenträger zur Verfügung, der eine Speicherschicht aufweist. Die Speicherschicht bildet eine Mehrzahl von ersten Flächenelementen, wobei die Speicherschicht mindestens eine optische Eigenschaft aufweist, die optisch anisotrop ist und die zwischen den ersten Flächenelementen räumlich variiert. Erfindungsgemäss ist über der Speicherschicht eine transparente oder transluzente Deckschicht angeordnet, die eine Mehrzahl von jeweils als Polarisationsfilter für eine vorbestimmte Polarisationsrichtung wirkenden zweiten Flächenelementen bildet, wobei die vorbestimmte Polarisationsrichtung zwischen den zweiten Flächenelementen variiert.

Die Speicherschicht weist also mindestens eine optische Eigenschaft auf. Diese optische Eigenschaft kann z.B. ein Farbton (z.B. rot vs. gelb), ein Helligkeitswert (z.B. dunkel vs. hell) in einem bestimmten Wellenlängenbereich, und/oder eine Farbwechseleigenschaft (z.B. Farbwechsel beobachtbar vs. kein Farbwechsel beobachtbar) sein. Diese Eigenschaft ist optisch anisotrop in die Speicherschicht eingeprägt, d.h. es gibt mindestens ein Flächenelement, in dem sich die optische Eigenschaft bei Beobachtung mit Licht unterschiedlicher Polarisationsrichtungen innerhalb der Ebene der Speicherschicht unterscheidet. Die optische Eigenschaft kann dadurch optisch anisotrop in die Speicherschicht eingeprägt worden sein, dass die Flächenelemente der Speicherschicht mit polarisiertem Schreiblicht beschrieben worden sind, insbesondere mit linear polarisiertem Schreiblicht. Dadurch sind Informationen optisch anisotrop in die Speicherschicht eingeprägt.

Über der Speicherschicht ist eine Deckschicht angeordnet. Diese wirkt als räumlich variierender Polarisationsfilter. Konkret ist über der Speicherschicht, präzise gesprochen über den ersten Flächenelementen der Speicherschicht, eine Mehrzahl zweiter Flächenelemente der Deckschicht angeordnet, wobei jedes dieser Flächenelemente als Polarisationsfilter für eine vorbestimmte Polarisationsrichtung wirkt, bevorzugt für eine vorbestimmte lineare Polarisationsrichtung in der Ebene der Speicherschicht. Die vorbestimmte Polarisationsrichtung variiert zwischen den zweiten Flächenelementen. Dadurch wird für jedes erste Flächenelement der Speicherschicht nur noch diejenige Information auslesbar, die mit der "passenden" Polarisation ins erste Flächenelement eingeprägt worden war, nämlich mit derjenigen Polarisationsrichtung, die der Durchlasspolarisation des darüber angeordneten zweiten Flächenelements entspricht.

Auf diese Weise ist es möglich, Teile der in die Speicherschicht eingeschriebenen Daten zu verbergen ("maskieren"). Die Deckschicht wirkt wie eine Polarisationsmaske. Dabei gehen die so maskierten Datenteile nicht verloren, sondern sie bleiben in der Speicherschicht vorhanden und sind lediglich vor dem Auge des Beobachters verborgen. Mit geeigneten Massnahmen, z.B. Entfernung oder Modifikation der Deckschicht, wird es möglich, die verborgenen Daten wieder freizulegen.

In einer vorteilhaften Ausgestaltung weist die Deckschicht diffraktive Strukturen auf, die so ausgebildet sind, dass sie Licht optisch anisotrop durchlassen bzw.

reflektieren. Insbesondere können die diffraktiven Strukturen als Beugungsgitter, insbesondere Liniengitter mit oder ohne "Blazing" ausgebildet sein. Es ist bekannt, dass optische Gitter eine Transmission zeigen, die vom Polarisationswinkel des eingestrahlten Lichts abhängt. So ist in der Regel die Transmission für Licht, das orthogonal zur Richtung der Linien des Beugungsgitters polarisiert ist, markant höher als für Licht, das parallel dazu polarisiert ist. Insofern wirkt ein Beugungsgitter als Polarisationsfilter, dessen Durchlasspolarisation senkrecht zur Linienrichtung verläuft. Die Polarisationsfilterwirkung kann durch geeignete Ausgestaltung des Gitters (Linienabstand, Blazingwinkel, Materialwahl) maximiert werden, bis hin zu nahezu kompletter Blockade von parallel zur Linienrichtung polarisiertem Licht. Die Beugungsgitter können insbesondere in Form von periodisch angeordneten, parallelen Graten auf der von der Speicherschicht abgewandten Oberfläche der Deckschicht ausgebildet sein. Die Periodizität beträgt bevorzugt ca. 200 Nanometer bis 1000 Nanometer, bevorzugt 400 Nanometer bis 800 Nanometer. Die diffraktiven Strukturen liegen bevorzugt zur Oberfläche des Datenträgers hin offen, d.h. sie sind von aussen frei zugänglich.

Die diffraktiven Strukturen können auf besonders einfache Weise gefertigt sein, indem sie in die Deckschicht, z.B. eine Decklackschicht, eingeprägt sind ("embossing"). Das Einprägen von diffraktiven Strukturen in eine noch weiche Decklackschicht ist dem Fachmann an sich bekannt. Solcherart geprägte Lacke finden breite Anwendung von rein dekorativen Anwendungen bis hin zu High-Security-Produkten. Maschinen, die mit klassischen Prägeverfahren arbeiten, sind z.B. von James-River erhältlich. Das Prägen kann entweder endlos mit einer Prägewalze (analog zu einem Rollsiegel) oder intermittierend nach dem "Stempel-Prinzip" erfolgen. Die prägende Patrize wird in diesem Zusammenhang auch "Shim" bezeichnet. Shims werden durch photolithographische Verfahren typischerweise aus (vernickelten) Si-Wafern hergestellt. Erfolgt das Prägen mit einer Prägewalze, so werden sog. "Wallpaper" erhalten mit einem Rapport des Motives, welcher maximal dem Umfang der Prägewalze oder einem ganzzahligen Teil davon entspricht. Solche Prägungen sind z.B. von "Hologramm"-Geschenk-Papieren bekannt, die die eingeprägten diffraktiven Strukturen zu rein dekorativen Zwecken nutzen. Es können aber auch Sicherheitsmerkmale auf diesem Wege erhalten werden (Patches, Siegel), wobei diese aus der Rolle auf das Endformat herunter geschnitten oder gestanzt werden.

An intermittierenden Verfahren für die Herstellung von geprägten Strukturen kommen neben den "klassischen" Hub-Abpräge-Verfahren auch noch Sprengen/Sprengprägen und ablatives Lasern in Frage.

Das Prägen kann nach Art mechanischer Schreibmaschinen (Typenhebel, Kugelkopf, Typenrad) individualisiert erfolgen. Für das individualisierte Prägen können auch an sich bekannte Nummerierwerke für Druckmaschinen wie das NUMEROTA-System der KBA-NotaSys eingesetzt werden. Im vorliegenden Zusammenhang kann ein Nummerierwerk als eine weitere Variation des Prinzips einer mechanischen Schreibmaschine angesehen werden.

Die räumliche Variation der optischen Eigenschaft zwischen den ersten Flächenelementen definiert für eine erste Richtung der Anisotropie (bei optisch eingeschriebenen Daten: für eine erste Polarisationsrichtung des Schreiblichts) einen ersten Datensatz, der mit Leselicht einer ersten Polarisationsrichtung auslesbar ist, aber mit Leselicht mindestens einer weiteren Polarisationsrichtung nicht auslesbar ist. Die vorbestimmte Polarisationsrichtung der zweiten Flächenelemente variiert dann derart, dass ein Teil des ersten Datensatzes durch die Deckschicht maskiert ist. In anderen Worten ist es also bevorzugt, dass aufgrund der Deckschicht nur noch ein Teil eines mit einer vorbestimmten Polarisationsrichtung eingeprägten Datensatzes ohne weiteres optisch auslesbar ist, während der Rest des Datensatzes verborgen ist und nur mit Hilfsmitteln ausgelesen werden kann.

Die Speicherschicht kann mittels Polarisationsmultiplexing in jedem ersten Flächenelement mehr als ein Bit tragen, wie dies an sich aus dem Stand der Technik bekannt ist (insbesondere wie in der oben genannten Dissertation von Martin Imhof beschrieben). Insbesondere kann die räumliche Variation der optischen Eigenschaft zwischen den ersten Flächenelementen für eine Zahl $p > 1$ verschiedener Richtungen der Anisotropie jeweils einen Datensatz in Form einer Folge von Bits definieren, so dass in jedem der ersten Flächenelemente $p$ Bits gespeichert sind, wobei jedes dieser Bits mit Licht jeweils einer zugeordneten Polarisationsrichtung auslesbar ist. In diesem Fall ist es bevorzugt, dass die vorbestimmte Polarisationsrichtung der zweiten Flächenelemente derart zwischen den zweiten Flächenelementen variiert, dass für jedes der ersten Flächenelemente genau eines der darin gespeicherten Bits durch die Deckschicht hindurch optisch auslesbar ist. Dabei ist die Zahl $p$ bevorzugt eine Primzahl $p = 2, 3, 5, 7, 11, 13, ...$ usw. Jedes der auslesbaren Bits gehört zu einem der $p$ Datensätze, wobei der Datensatz, zu dem das ausgelesene Bit gehört, zwischen den zweiten Flächenelementen variieren kann.

Die Datensätze können dabei beliebige Informationen repräsentieren. So kann z.B. ein Datensatz binär kodierte Informationen enthalten, z.B. den ASCII-kodierten Namen, das Geburtsdatum usw. eines Passinhabers; ein Datensatz kann aber auch bei visueller Beobachtung ein Bild bilden; der Datensatz wird dann z.B. durch Hell-/Dunkelwerte des Bildes gebildet. Datensätze derart unterschiedlichen Charakters können auch gemischt in der Speicherschicht vorliegen. Z.B. können die Polarisationsrichtungen der zweiten Flächenelemente so gewählt sein, dass bei Beleuchtung mit Beobachtungslicht ein Datensatz in Form eines Bildes sichtbar wird, während ein zweiter Datensatz mit binär kodierten Informationen durch die Deckschicht maskiert und nicht ohne weitere Massnahmen auslesbar ist. Der Vielfalt möglicher Kombinationen von Datensätzen sind hier keine Grenzen gesetzt.

Um die Symmetrie der möglichen Polarisationsrichtungen für den Beobachter augenfällig zu machen, können die ersten und/oder zweiten Flächenelemente geometrisch eine *p*-zählige Symmetrie aufweisen. Sie können auch in einem regelmässigen oder quasiregelmässigen *p*-zähligen Muster (bei *p* = 2 z.B. in einem Rechteckmuster, bei *p* = 3 z.B. in einem trigonalen oder hexagonalen Muster, bei *p* = 5 z.B. in einer Penrose-Parkettierung) angeordnet sein. Dies ist aber keineswegs zwingend. Im allgemeinen Fall können die Formgebung und Anordnung der ersten und zweiten Flächenelemente völlig beliebig erfolgen. Die Anordnung der zweiten Flächenelemente kann z.B. nach Art der EURion-Konstellation erfolgen.

In einer bevorzugten Ausgestaltung ist jedes der ersten Flächenelemente genau einem zweiten Flächenelement zugeordnet, z.B. indem die ersten und zweiten Flächenelemente gleich gross sind und genau übereinander angeordnet sind, oder indem mehrere erste Flächenelemente gemeinsam von einem zweiten Flächenelement überdeckt sind.

Die Speicherschicht kann insbesondere ein Pigment enthalten, in dem durch geeignete Massnahmen, insbesondere durch Beleuchtung mit hinreichend intensivem polarisiertem Schreiblicht, die optisch anisotrope Eigenschaft erzeugt werden kann. Bei diesem Pigment handelt es sich bevorzugt um Bakteriorhodopsin (BR) in Form einer Purpurmembran (PM), wobei die Purpurmembran in der Speicherschicht immobilisiert ist. Beim BR kann es sich um den Wildtyp, um eine Mutante oder um eine Variante, bei der das Retinal durch ein anderes Molekül ersetzt wurde, handeln. Die Immobilisierung der Purpurmembran in der Speicherschicht kann durch direktes Einbetten, z.B. von PM in einer Gelatine (ungehärtet oder gehärtet, wie von fotografischen Filmen her bekannt), bevorzugt in einer Form wie in EP 1 767 988 A1 beschrieben, geschehen, oder durch Einbetten einer Zubereitung von PM. Diese Zubereitung kann dazu dienen, das BR vor schädlichen Umwelteinflüssen zu schützen; die Zubereitung der PM kann insbesondere das BR in geeigneter Weise durch eine Umhüllungsschicht schützen. Die Purpurmembran kann gegebenenfalls auch in Form von Mikrokapseln vorliegen, wie dies z.B. in WO 2010/124908 beschrieben ist.

Ungebleichtes BR kann bei geeigneter Mutante und Zubereitung den oben beschriebenen Farbwechsel von violett nach gelb zeigen; durch Bleichen mit Schreiblicht geht dieser verloren, und die Farbe ändert sich irreversibel in gelblich bis farblos. BR weist also mindestens drei optische Eigenschaften auf, die durch Beleuchtung mit polarisiertem Schreiblicht anisotrop veränderbar sind, nämlich einerseits die (reversible) Farbwechseleigenschaft, andererseits die Farbtönung bei schwachem Leselicht, und schliesslich den Hell-Dunkel-Kontrast. Jede dieser Eigenschaften kann zum Auslesen der anisotrop eingeprägten Informationen verwendet werden.

Statt BR kann aber auch ein anderes photorefraktives/photochromes Material zum Einsatz kommen, z.B. Fe-dotiertes $LiNbO_3$ oder mit Cyanoazobenzol funktionaliserte Polyester. Das Material kann in Form von Farbpigmenten in einer transparenten oder transluzenten Trägerschicht vorliegen.

Ein entsprechendes Verfahren zur Datenspeicherung bzw. zur Herstellung eines Datenträgers weist auf:

Bereitstellen einer Speicherschicht, die mindestens eine durch Einwirkung von polarisiertem (insbesondere linear polarisiertem) Schreiblicht anisotrop veränderbare optische Eigenschaft aufweist;

Einspeichern von Daten in die Speicherschicht durch Belichten von ersten Flächenelementen der Speicherschicht mit polarisiertem (insbesondere linear polarisiertem) Schreiblicht, wobei die genannte optische Eigenschaft entsprechend den einzuspeichernden Daten derart verändert wird, dass die optische Eigenschaft zwischen den ersten Flächenelementen räumlich variiert und zumindest in einem Teil der ersten Flächenelemente optisch anisotrop wird; und

Erzeugen einer transparenten oder transluzenten Deckschicht auf der Speicherschicht, wobei die Deckschicht eine Mehrzahl von als (bevorzugt linearer) Polarisationsfilter für eine vorbestimmte Polarisationsrichtung wirkenden zweiten Flächenelementen aufweist, die über den ersten Flächenelementen angeordnet sind, und wobei die vorbestimmte Polarisationsrichtung zwischen den zweiten Flächenelementen variiert.

Das zweite und das dritte genannte Verfahrensmerkmal können in beliebiger Reihenfolge ausgeführt werden, d.h. es ist denkbar, dass die Deckschicht erst nach dem Einspeichern der Daten aufgebracht wird, es ist aber auch denkbar, dass die Deckschicht zunächst vor dem Einspeichern der Daten aufgebracht wird, die Flächenelemente aber erst nach dem Einspeichern der Daten so verändert werden, dass sie als Polarisationsfilter wirken. Auch ist denkbar, dass die Deckschicht mitsamt den polarisierenden Flächenelementen vor dem Einspeichern der Daten erzeugt wird, deren polarisierende Wirkung aber während des Einspeicherns der Daten aufgehoben wird, in ähnlicher Weise, wie dies nachstehend im Zusammenhang mit dem Auslesevorgang noch näher diskutiert wird.

Wie schon vorstehend erläutert wurde, kann das Erzeugen der Deckschicht umfassen:

Aufbringen einer unbeprägten Decksicht auf die Speicherschicht (bevorzugt vor dem Einspeichern der Daten); und

Einprägen von diffraktiven Strukturen in die Deckschicht (bevorzugt nach dem Einspeichern der Daten), um die als Polarisationsfilter wirkenden zweiten Flächenelemente zu erzeugen, wobei die diffraktiven Strukturen so ausgebildet werden, dass sie Licht optisch anisotrop durchlassen und/oder reflektieren.

Zum Auslesen des nicht maskierten Teils der Daten können die folgenden Schritte ausgeführt werden:

Beleuchten des Datenträgers mit unpolarisiertem Beobachtungslicht;
Beobachten des durch die Deckschicht hindurch von der Speicherschicht reflektierten oder durch die Speicherschicht und die Deckschicht transmittierten Beobachtungslichts, um einen durch die vorbestimmte Polarisationsrichtung der zweiten Flächenelemente vorgegebenen Teil der Daten auszulesen.

Diese Schritte können ohne zusätzliche Hilfsmittel ausgeführt werden. Auf diese Weise werden aber nur diejenigen Daten ausgelesen, die nicht durch die Deckschicht maskiert sind. Die maskierten Daten sind auf diese Weise nicht oder nur mit reduziertem Kontrast auslesbar. Dem unbewaffneten Auge werden also nur diejenigen Daten zugänglich, die mit der durch die diffraktive Struktur erzeugten Polarisationsrichtung auslesbar sind. In anderen Worten lässt sich sagen, dass durch die Überprägung mit einer diffraktiven Struktur ohne weitere Hilfsmittel nur die Bits aus den Flächenelementen ausgelesen werden, deren Polarisation der durch die aufgeprägte diffraktive Struktur erzeugten Polarisation entspricht. Die anderen Bits werden durch die überprägte diffraktive Struktur "unleserlich".

Wollte man nur einen einzigen Datensatz für eine bestimmte Anisotropierichtung auslesen, würde es genügen, die gesamte Deckschicht als Polarisationsfilter für dieselbe Polarisationsrichtung auszugestalten, z.B. durch eine einheitliche Prägung. Dies würde zwar in gewisser Weise einen Fälschungsschutz darstellen, birgt für den praktischen Nutzen der gespeicherten Informationen aber einen Nachteil.

Es wird daher vorgeschlagen, dass sich die Polarisationsrichtungen zwischen den zweiten Flächenelementen unterscheiden. Welches Bit auslesbar bleibt, braucht erst unmittelbar vor dem Prägen entschieden werden. Bei Verwendung einer geeigneten Prägemechanik wird eine sehr hohe Flexibilität ermöglicht, vergleichbar der Flexibilität einer mechanischen Schreibmaschine.

Das Beobachtungslicht kann weisses Licht sein, es kann sich aber auch um Licht eines beliebigen sichtbaren Wellenlängenbereiches handeln. Wenn als Pigment BR verwendet wird, hat sich grünes Licht als vorteilhaft erwiesen, um einen maximalen Hell-Dunkel-Kontrast beim Auslesen und damit eine optimale Lesesicherheit zu gewährleisten.

Wenn die Deckschicht von aussen her zugängliche, insbesondere geprägte, diffraktive Strukturen aufweist, wird es mit einfachen Hilfsmitteln möglich, auch die maskierten Daten auszulesen. Dies kann durch die folgenden Schritte erfolgen:

Aufbringen eines Mediums, welches einen ähnlichen Brechungsindex wie die Deckschicht aufweist, auf die Deckschicht;
Beleuchten der Speicherschicht mit Beobachtungslicht;
Detektieren des von der Speicherschicht durch die Deckschicht und das Medium hindurch reflektierten oder des durch die Speicherschicht, die Deckschicht und das Medium transmittierten Beobachtungslichts,
wobei das Beleuchten und/oder das Detektieren polarisationsselektiv erfolgt.

Bei dem Medium mit ähnlichem Brechungsindex kann es sich z.B. um ein Gel, ein Öl oder ein anderes geeignetes fliessfahiges Medium handeln. Bevorzugt ist das Medium benetzend für die Deckschicht. Insofern bestehen Analogien zur Öl-Immersion in der Mikroskopie. Dabei ist der Begriff "ähnlicher Brechungsindex" funktional so zu verstehen, dass sich der Brechungsindex des Mediums so wenig von dem Brechungsindex der Deckschicht unterscheidet, dass die Beugungswirkung der diffraktiven Strukturen im Wesentlichen aufgehoben wird. In absoluten Zahlen kann das z.B. der Fall sein, wenn sich der Brechungsindex des Mediums um weniger als 0.2, bevorzugt weniger als 0.1, besser weniger als 0.05, vom Brechungsindex der Deckschicht unterscheidet. Brechungsindizes typischer Bindemittel für die Deckschicht bewegen sich im Bereich von 1,49 bis 1,65 (z.B. hat reines PMMA als Beispiel für UV-gehärtetes Bindemittel einen Brechungsindex von 1,491, die Brechungsindizes von Epoxiden bewegen sich im Bereich von 1,55 bis 1,63). Die aus der Mikroskopie bekannten Immersionsöle werden mit Brechungsindizes zwischen 1,30 bis 2,11 gehandelt (z.B. von Cargille Labs). Ein "Match" der Brechungsindizes der Deckschicht und des Mediums ist also leicht herstellbar.

Das Auslesen der polarisationsabhängig gespeicherten Informationen kann mit polarisationsselektiven optischen Methoden sowohl im Transmissions- als auch im Reflexionsmodus erfolgen. Zur Detektion der so ausgelesenen Informationen sind z.B. CCD- oder CMOS-Chips einer an sich herkömmlichen Kamera geeignet.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1    eine schematische Schnittdarstellung durch einen Datenträger gemäss einer ersten Ausführungsform;

Fig. 2    eine schematische Schnittdarstellung durch einen Datenträger gemäss einer zweiten Ausführungsform;

Fig. 3    eine Draufsicht auf eine beprägte Deckschicht gemäss einer ersten Ausführungsform;

Fig. 4    eine Draufsicht auf eine beprägte Deckschicht gemäss einer zweiten Ausführungsform;

Fig. 5    eine schematische Skizze eines Verfahrens zur Erzeugung eines Datenträgers mit darin eingespeicherten Daten;

Fig. 6    eine schematische Skizze eines laseroptischen Systems zum Einspeichern der Daten in den Datenträger;

Fig. 7    eine schematische Skizze zum Auslesen der Daten aus dem Datenspeicher gemäss einer ersten Ausführrunungsform;

Fig. 8    eine schematische Skizze zum Auslesen der Daten aus dem Datenspeicher gemäss einer zweiten Ausführrunungsform; und

Fig. 9    eine schematische Skizze zum Auslesen der Daten aus dem Datenspeicher gemäss einer dritten Ausführrunungsform.

BESCHREIBUNG BEVORZUGTER AUSFÜHRUNGSFORMEN

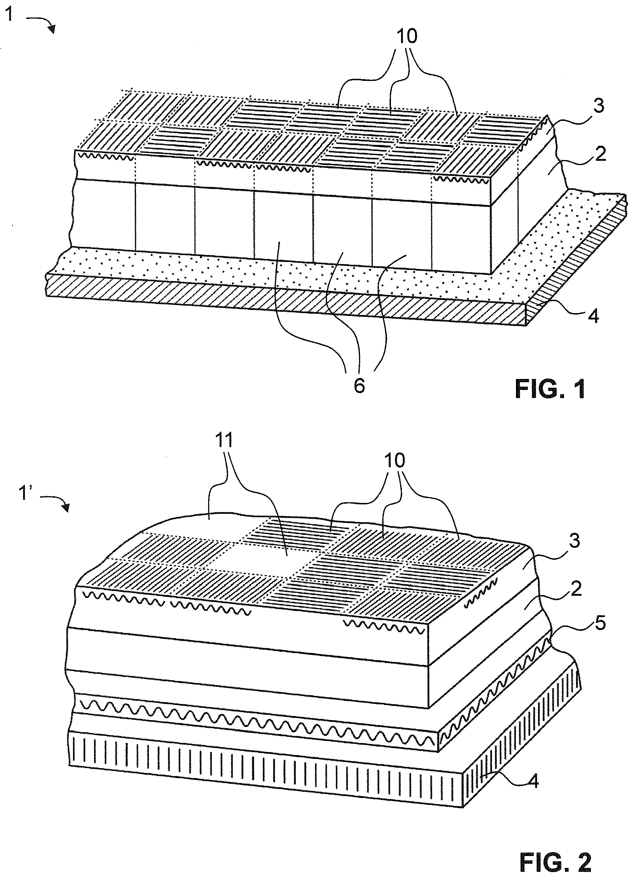

Figur 1 zeigt eine schematische Schnittdarstellung durch einen Datenträger 1 gemäss einer ersten Ausführungsform. Auf einem Substrat 4 befindet sich eine Speicherschicht 2 mit BR-PM-Pigmenten und darüber eine prägbare Deckschicht 3. Die Speicherschicht 2 wird im Folgenden auch als BR-ODS-Schicht bezeichnet. Die Schichtdicken der jeweiligen Schichten zueinander sind nicht massstäblich dargestellt, und die einzelnen Schichtdicken sind zum Zwecke der besseren Erkennbarkeit stark vergrössert dargestellt.

Die Speicherschicht 2 kann gedanklich in eine Vielzahl von Bereichen unterteilt werden, die in Draufsicht jeweils ein Flächenelement (Pixel) 6 bilden. Im vorliegenden Beispiel sind die Bereiche von quaderförmiger Gestalt mit quadratischer Grundfläche und grenzen lateral direkt aneinander. Die einzelnen Flächenelemente 6 haben somit eine quadratische Form. Es sind aber auch andere Formen und Anordnungen der Flächenelemente möglich, wie dies nachstehend noch näher beschrieben wird.

In jedes der Flächenelemente 6 sind optisch anisotrop ein oder mehrere Bits eingeschrieben, wie dies nachstehend noch näher beschrieben wird. Die Flächenelemente 6 bilden dadurch insgesamt ein Datenfeld, in das Daten eingeschrieben sind. Bei den im Datenfeld gespeicherten Daten kann es sich z.B. um direkt visuell wahrnehmbare Daten in Form eines direkt durch Beobachtung mit dem unbewaffneten Auge wahrnehmbaren Bildes handeln, das durch einen Farbkontrast zwischen den einzelnen Flächenelementen gebildet wird; es kann sich aber auch um beliebig codierte Daten, z.B. Daten in Form einer binären Bitfolge (Datenstring), handeln, die nur mit geeigneten Hilfsmitteln sinnvoll ausgelesen werden können.

In jedem der Bereiche, die jeweils ein Flächenelement 6 definieren, ist eine sehr grosse Zahl von PM-Patches enthalten. Die Orientierung der PM-Patches ist dabei stochastisch gleichmässig über alle Raumrichtungen verteilt. Die PM-Patches sind in der Speicherschicht 2 immobilisiert. Dadurch nimmt jeder PM-Patch eine feste Orientierung im Raum ein. Beim optisch anisotropen Schreiben der Bits wird polarisiertes Schreiblicht verwendet. Dabei werden nur diejenigen BR-Moleküle in den PM-Patches gebleicht, die eine "passende" Orientierung haben. Ohne durch die Theorie gebunden sein zu wollen, wird vermutet, dass diejenigen BR-Moleküle gebleicht werden, deren Retinal im Wesentlichen parallel zur Polarisationsrichtung des Schreiblichts angeordnet ist. Auf diese Weise werden die optischen Eigenschaften der Speicherschicht optisch anisotrop verändert. Im vorliegenden Fall werden durch das Schreiben mit polarisiertem Licht mindestens drei wahrnehmbare Eigenschaften verändert, nämlich der Farbwechsel (die gebleichten Bereiche zeigen keinen oder stark reduzierten Farbwechsel), der Farbwert (die gebleichten Bereiche erscheinen bei schwacher Beleuchtung mit Weisslicht gelblich, die ungebleichten dagegen violett) und der Hell-Dunkel-Wert (die gebleichten Bereiche erscheinen bei Beleuchtung mit Weisslicht oder mit spektral limitiertem Licht, z.B. grünem Licht, heller als die ungebleichten Bereiche). Die so veränderte optische Eigenschaft entlang der vorgegebenen Polarisationsrichtung entspricht dem Wert des eingeschriebenen Bits (z.B. hell = 1, dunkel = 0).

Durch Polarisationsmultiplexing kann in ein- und demselben Flächenelement 6 eine Anzahl von p Bits eingeschrieben werden. Die Anzahl der gleichzeitig auf dem gleichen Flächenelement gespeicherten Bits (Datenebenen) beträgt also im einfachsten Falle zwei, und die zugeordneten Polarisationsrichtungen stehen dann senkrecht aufeinander. Ebenso ist es möglich, drei Bits im gleichen Flächenelement gleichberechtigt zu speichern, indem der Winkel zwischen den Polarisationsrichtungen 60 Grad beträgt. In entsprechender Weise lassen sich vier Bits (mit 45 Grad Winkelunterschied), fünf Bits (mit 36 Grad Winkelunterschied) usw. gleichberechtigt speichern.

Der Winkel δ, um welchen sich die Polarisationsrichtungen des polarisierten Lichtes, mit welchem die Bits geschrieben werden, unterscheidet, kann allgemein wie folgt ausgedrückt werden:

$$\text{Winkel } \delta = 360 \text{ Grad}/(2 \cdot p).$$

Dabei ist p eine natürliche Zahl grösser gleich 2. Bevorzugt ist p eine Primzahl, d.h. p ist ausgewählt aus der Folge p = 2, 3, 5, 7, 11, 13, 17, 19, 23, 29, 31, 37, 41, 43, 47, 53, 59, 61, 67, 71, 73, 79, 83, 89, 97, 101, 103, 107, 109, 113, 127, 131, 137, 139, 149, 151, 157, 163, 167, 173, 179, 181, ....

Limitierend für die Zahl der im selben Flächenelement unter derartigem Polarisationsmultiplexing speicherbaren Bits wirken dabei unter anderem die Qualität der BR-ODS-Schicht und die Breite der beim Schreiben erzeugten Winkelverteilung der gebleichten BR-Moleküle. Zudem ist in der Praxis die Winkelauflösung zwischen verschiedenen Polarisationsrichtungen, die beim Auslesen noch unterschieden werden können, relevant.

Bei einer Winkelauflösung von 1 Grad ergäben sich somit als maximal pro Flächenelement gleichberechtigt speicherbare Bits 179. Eine so hohe Anzahl darf aber als theoretische Obergrenze angenommen werden, die nur bei optisch perfekten Schichten und auch sonst optimalen optischen Gegebenheiten beim Schreiben und Auslesen erreichen lässt. Insbesondere führt das Polarisationsmultiplexing bei gegebener Pixelgrösse zu einer Reduktion der für die Speicherung eines einzelnen Bits zur Verfügung stehenden BR-Moleküle, was zu einer Verringerung des Signal-Rausch-Abstands führt.

Praxisgerecht dürfte somit letztlich die gleichzeitige Speicherung von 2 bis 13 Bits in einem Flächenelement der Speicherschicht sein (2 bis 13 durch Polarisationsmultiplexing unterscheidbare Datenebenen), obgleich es keine theoretische Obergrenze für die Anzahl der Bits in einem Flächenelement in der Speicherschicht gibt. Bevorzugt ist eine Anzahl von 2, 3, 4 oder 5 Bits pro Flächenelement (2, 3, 4 oder 5 Datenebenen).

Neben den Unterschieden in der linearen Polarisation können auch Unterschiede in der zirkularen Polarisation oder gemischte Polarisationswerte, wie sie durch Stokes-Parameter beschrieben werden, zur Speicherung von Bits in einem Flächenelement genutzt werden.

Die minimale Grösse eines Flächenelementes 6 (minimale Pixelgröße), in dem polarisationsabhängig Bits gespeichert werden können, wird im Wesentlichen durch den Fokusquerschnitt des Laserstrahls beim Schreibvorgang definiert. Die minimale laterale Abmessung liegt typischerweise zwischen 1 Mikrometer und 30 Mikrometer.

Die Deckschicht 3 ist so gestaltet, dass einzelne Bits in der Speicherschicht maskiert werden, d.h. sie sind ohne zusätzliche Massnahmen nicht mehr oder nur unter stark erschwerten Bedingungen auslesbar. Um die Bits zu maskieren, weist die Deckschicht bereichsweise eine Beprägung mit zweiten Flächenelementen 10 auf, in die diffraktive Strukturen eingeprägt sind. Wie nachstehend noch näher erläutert wird, kann die Beprägung mechanisch mit Hilfe von Shims erzeugt werden. Im vorliegenden Beispiel bildet jede diffraktive Struktur ein Beugungsgitter aus parallelen, linienförmigen Vertiefungen. Die Beugungsgitter sind nur stark schematisch in Draufsicht durch Linienmuster dargestellt und nicht massstäblich zu verstehen. Indem die diffraktiven Strukturen Beugungsgitter bilden, wirken sie als lineare Polarisationsfilter. Die hauptsächlich durchgelassene Polarisationsrichtung steht dabei senkrecht auf der Richtung der Linien des Gitters. Dabei unterscheidet sich die durchgelassene Polarisationsrichtung von zweitem Flächenelement zu zweitem Flächenelement 10.

Im vorliegenden Beispiel sind die zweiten Flächenelemente 10 der Deckschicht 3 in ihrem Grundriss gleich gross wie die ersten Flächenelemente 6 der Speicherschicht 2, und jedes zweite Flächenelement 10 überdeckt genau ein erstes Flächenelement 6. Es ist aber auch möglich und in der Praxis bevorzugt, dass sich Grösse und Form der zweiten Flächenelemente 10 von Grösse und Form der ersten Flächenelemente 6 unterscheiden, insbesondere, dass jeweils ein zweites Flächenelement eine Mehrzahl von ersten Flächenelementen überdeckt.

Die minimale Grösse der zweiten Flächenelemente 10 wird vor allem fertigungstechnisch durch die minimal mögliche Größe der diffraktiven Strukturen bedingt. In der Praxis sind Kantenlängen von beispielsweise 500 Mikrometer bis 2000 Mikrometer realistisch. Dadurch kann jedes der zweiten Flächenelemente in der Praxis einige dutzend bis einige tausend (z.B. zwischen 100 und 10'000) erste Flächenelemente überdecken.

Die Figur 2 zeigt, wiederum stark schematisch und nicht massstäblich, eine zweite Ausführungsform eines Datenträgers. Zusätzlich ist hier zwischen Substrat 4 und Speicherschicht 2 eine Hilfsschicht 5 vorhanden. Diese kann z.B. zur Haftungsverbesserung dienen oder als Dekorschicht ausgebildet sein. Selbstverständlich können weitere derartige Hilfsschichten vorhanden sein.

Im Beispiel der Figur 2 überdecken die zweiten Flächenelemente 10 der Deckschicht 3 die ersten Flächenelemente 6 der Speicherschicht 2 nur teilweise. Für bestimmte erste Flächenelemente 6 ist die Beprägung ausgelassen (unbeprägte Bereiche 11), d.h., es ist möglich, dass bestimmte Flächenelemente nicht durch die Beprägung maskiert werden.

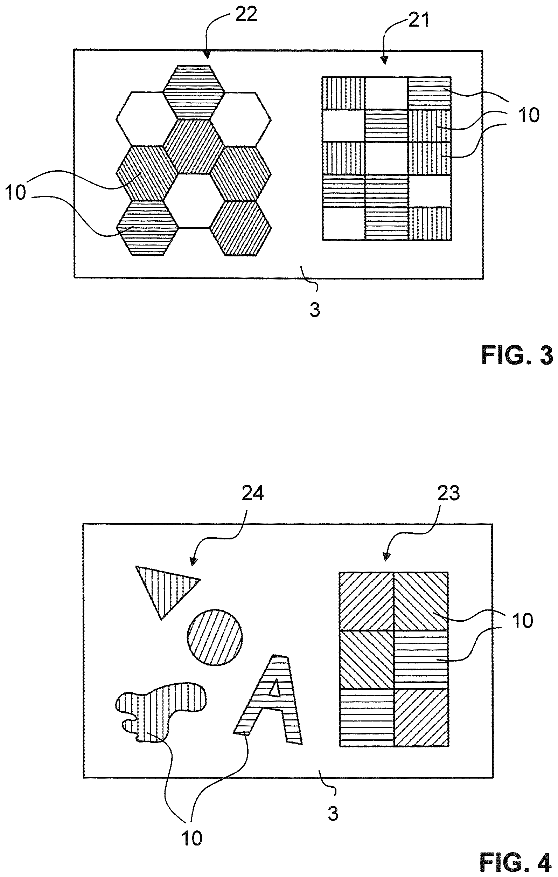

In den Figuren 3 und 4 sind beispielhaft verschiedene Beprägungsmuster für die Deckschicht 3 gezeigt.

So zeigt Figur 3 rechts eine Beprägung 21 aus Beugungsgittern, die zum Teil nahtlos aneinandergrenzende, rechteckige zweite Flächenelemente 10 bilden. Die Linienrichtungen der Beugungsgitter (und die dazu senkrecht stehenden durchgelassenen Polarisationsrichtungen) unterscheiden sich zwischen benachbarten zweiten Flächenelementen 10 jeweils um 0° oder 90°. Eine solche Beprägung ist sinnvoll, wenn genau zwei Polarisationsrichtungen unterschieden werden sollen, nämlich "horizontal" (0°) und "vertikal" (90°) in Bezug auf die Zeichenebene, weil in der Speicherschicht beim Schreiben der Daten ein Polarisationsmultiplexing mit genau diesen beiden Polarisationsrichtungen durchgeführt wurde. Dabei besteht zwischen der Form der zweiten Flächenelemente 10 und den Polarisationsrichtungen eine enge Beziehung: Die Ausrichtung der Kanten der rechteckigen zweiten Flächenelemente entspricht gerade den zur Datenspeicherung verwendeten Polarisationsrichtungen. Auf diese Weise ist für den Betrachter unmittelbar anhand der Form der zweiten Flächenelemente erkennbar, welche Polarisationsrichtungen zum Speichern verwendet wurden und beim Auslesen relevant sind.

In der Figur 3 links ist eine Beprägung 22 gezeigt, deren zweite Flächenelemente 10 eine hexagonale Form aufweisen. Auch in dieser Ausführungsform grenzen die individuellen zweiten Flächenelemente 10 teilweise direkt aneinander an, und die diffraktiven Strukturen in jedem der Flächenelemente 10 bilden ein Beugungsgitter. Die Linienrichtungen der Beugungsgitter (und die dazu senkrecht stehenden durchgelassenen Polarisationsrichtungen) unterscheiden sich zwischen den zweiten Flächenelementen 10 um Vielfache von 60°. Eine Beprägung dieser Art ist sinnvoll, wenn drei Polarisationsrichtungen unterschieden werden sollen, nämlich 30°, 90° und 150° in Bezug auf die Horizontale der Zeichenebene, weil in der Speicherschicht beim Schreiben der Daten ein Polarisationsmultiplexing mit diesen drei Polarisationsrichtungen durchgeführt wurde. Wiederum besteht eine enge Beziehung zwischen der Form der zweiten Flächenelemente 10 und den Polarisationsrichtungen: Die Ausrichtung der Kanten der hexagonalen zweiten Flächenelemente entspricht gerade den zur Datenspeicherung verwendeten drei Polarisationsrichtungen.

Während also in der Figur 3 die Form und Ausrichtung der zweiten Flächenelemente in enger Beziehung zu den verwendeten Polarisationsrichtungen steht, besteht bei den Beprägungen 23, 24 der Figur 4 kein erkennbarer Zusammenhang zwischen der Form der zweiten Flächenelemente und den verwendeten Polarisationsrichtungen.

So unterscheiden sich bei der Beprägung 23 in der Fig. 4 rechts die Linienrichtungen der Beugungsgitter (und damit die durchgelassenen Polarisationsrichtungen) zwischen den zweiten Flächenelementen 10 um Vielfache von 45°, d.h. es gibt vier unterscheidbare Polarisationsrichtungen ("horizontal", "vertikal", "schräg nach rechts oben", "schräg nach links oben" bzw. 0°, 45°, 90° und 135° in Bezug auf die Horizontale der Zeichenebene). Eine solche Beprägung ist sinnvoll, wenn in der Speicherschicht beim Schreiben der Daten ein Polarisationsmultiplexing mit vier entsprechenden Polarisationsrichtungen durchgeführt wurde. Die Form der zweiten Flächenelemente spiegelt hier aber die vierzählige Symmetrie der Polarisationsrichtungen nicht wider.

Noch geringer ist die Entsprechung bei der Beprägung 24 in der Fig. 4 links. Hier haben die zweiten Flächenelemente 10 völlig freie Formen, die in keinerlei Zusammenhang mit den Polarisationsrichtungen der eingeprägten Beugungsgitter haben. Nebst den hier gezeigten Beispielen ist eine Vielzahl an weiteren Umrissformen für die polarisierend wirkenden diffraktiven Strukturen möglich. So ist es z.B. möglich, durch eine geeignete Beprägung der Deckschicht polarisierend wirkende Schriftzüge oder Barcodes oder sonstige graphische Zeichen auf dem Datenträger zu erzeugen. Dadurch ist eine große Flexibilität gegeben. Die dazu verwendeten Prägestempel unterscheiden sich dabei bevorzugt nur in der Ausrichtung der diffraktiven Struktur: werden z.B. zwei Bits pro Flächenelement in der ODS-Schicht gespeichert, so werden zwei Sätze von Typen verwendet, wobei dann die diffraktiven Strukturen der Typen der einzelnen Sätze um 90 Grad gegeneinander verkippt sind; im Falle von drei Bits sind es dann drei Sätze mit einem Winkel-Unterschied von 60 Grad, etc.

Dadurch, dass die Prägungen variabel angeordnet werden können, kann individuell von ODS-Flächenelement (d.h. erstem Flächenelement in der Speicherschicht 2) zu ODS-Flächenelement flexibel entschieden werden, welches Bit pro ODS-Flächenelement offen zugänglich bleibt. Die übrigen jeweils pro ODS-Flächenelement gespeicherten Bits werden verborgen. Damit ist eine mehrdimensionale Flexibilität des durch Kombination erzeugten Sicherheits-Merkmals gegeben.

Die Anordnung der zweiten Flächenelemente 10 kann auch als quasi-periodische Anordnung, z.B. als Penrose-Parkettierung aus sogenannten Penrose-Kacheln, erfolgen. In diesem Fall ergibt sich daraus eine weitere Möglichkeit zur Kodierung: da die Position der einzelnen Penrose-Kachel im Gesamtmuster aufgrund der nicht vorhandenen Periodizität in einer gewissen Weise einzigartig ist, kann die Position des Flächenelements in besonderer Weise die Bedeutung der Daten erweitern. Mit solchen geometrischen Formen lassen sich Flächen lückenlos füllen. Die mathematischen Erkenntnisse zu "Flächenkachelungen" sind dem Fachmann bekannt. Für ein anschauliches Beispiel über die sich für die graphische Gestaltung ergebenden Möglichkeiten siehe z.B. die "Flächenfüllungen" des Graphikers M. C. Escher. Die darin (und den aperiodischen Kachel-Mustern) zugrunde liegenden mathematischen Prinzipien sind bekannt, ebenfalls die daraus ableitbaren Konsequenzen für Codierung, graphisches Design oder Informations-Gehalt.

Ein lückenloses Füllen der gesamten Fläche ist aber nicht zwingend und z.B. bei siebenzähliger Symmetrie auch gar nicht möglich. So können z.B. auch kreisförmige zweite Flächenelemente vorgesehen werden, und die zweiten Flächenelemente können als "Schachbrett", "auf Lücke" oder auch scheinbar regellos und in jeder sonstigen Anordnung auf der Deckschicht positioniert werden. Jede Anordnung ist möglich, sei es, um der Gestaltung des gesamten gekennzeichneten Gegenstandes Rechnung zu tragen, oder sei es, dass die Anordnung der geprägten zweiten Flächenelemente über datentragenden ersten Flächenelementen selbst wiederum Daten kodiert. Ein Beispiel für eine solche sinntragende Anordnung von zweiten Flächenelementen ist die EURion-Konstellation (auch als Omron-Ringe bekannt), welche u.a. bei den EURO-Banknoten Verwendung findet.

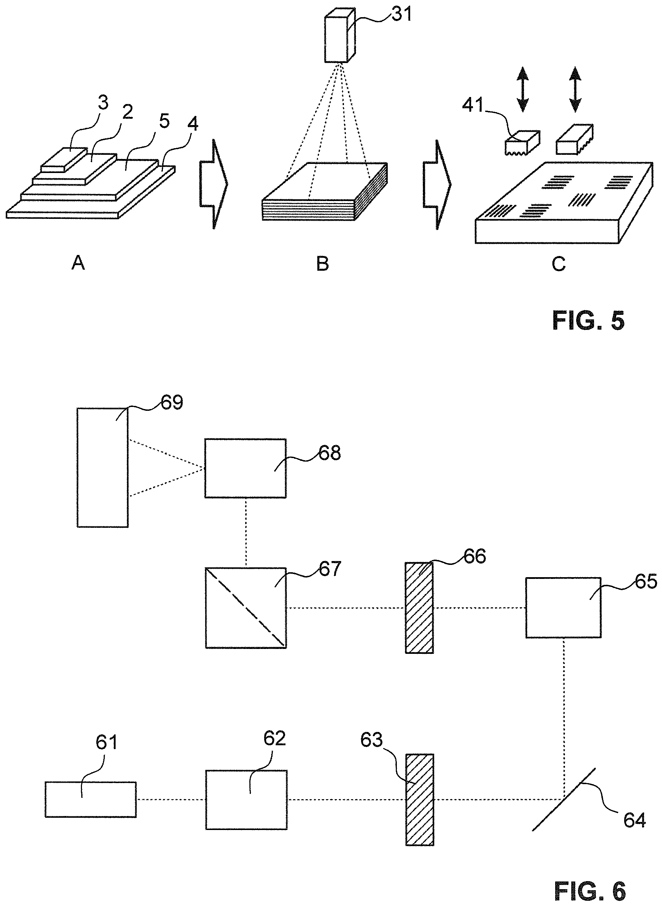

In der Fig. 5 ist in stark schematischer Weise illustriert, wie ein Datenträger der vorstehend diskutierten Art hergestellt, beschrieben und maskiert werden kann. In Schritt A wird zunächst der Datenträger vorbereitet, indem ein Substrat 4 optional mit einer oder mehreren Hilfsschichten 5, einer Datenschicht 2 und einer noch weichen, beprägbaren Deckschicht 3 beschichtet wird. Die Datenschicht 2 ist in diesem Moment noch unbeschrieben. In Schritt B wird der Datenträger sodann Pixel für Pixel polarisiertem Laserlicht ausgesetzt (schematisch durch eine Laseranordnung 31 angedeutet), und die Datenschicht wird dadurch optisch anisotrop beschrieben. In Schritt C werden schliesslich die diffraktiven Strukturen in die noch weiche Deckschicht 3 eingeprägt, z.B. mit Prägestempeln (Shims) 41, und die Deckschicht wird endgültig ausgehärtet (bzw. härtet dann selbsttätig fertig aus).

Die Fig. 6 illustriert schematisch eine an sich bekannte Laseranordnung, die zum Beschreiben des Datenträgers eingesetzt werden kann. Laserlicht aus einem Laser 61 wird durch optische Elemente 62 zur Verbesserung der Strahlqualität geleitet (z.B. eine Anordnung zur Strahlaufweitung, geeignete Filter wie IR-Filter usw.). Durch eine drehbare erste Verzögerungsplatte ($\lambda$/2-Platte) 63 gelangt das Licht auf einen ersten Spiegel 64, von dort durch einen Strahlteiler 65 und durch eine zweite Verzögerungsplatte ($\lambda$/2-Platte) 66 auf einen weiteren, als Polarisator 67 wirkenden Strahlteiler und in einen Galvanoscanner 68, der das Licht auf einen Fokus auf der Probe 69 fokussiert und mit welchem die Probe 69 (d.h. der Datenträger) Pixel für Pixel beschrieben wird. Weitere Details können der Dissertation von Martin Imhof, a.a.O., entnommen werden und sind dem Fachmann an sich bekannt.

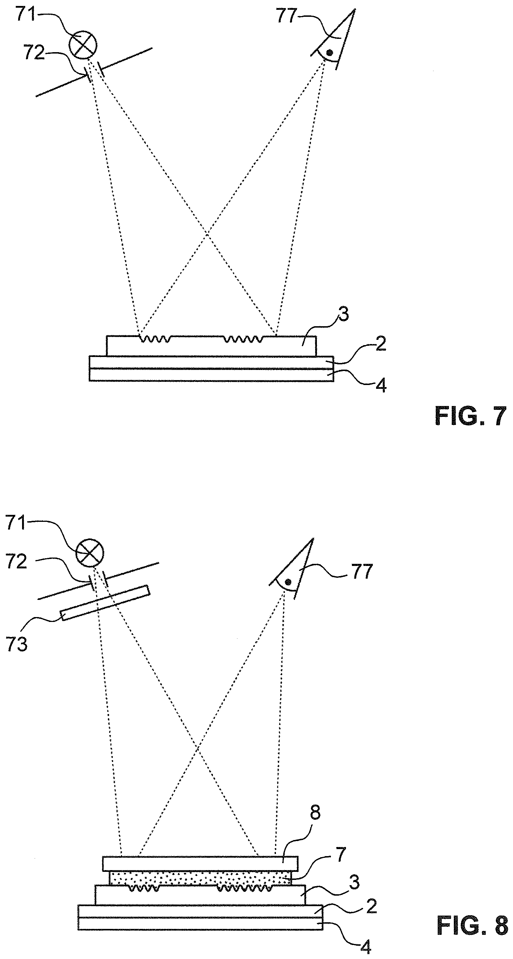

Verschiedene Möglichkeiten zum Auslesen der Daten aus der Speicherschicht 2 sind in den Figuren 7-9 schematisch illustriert.

Der einfachste Fall ist schematisch in der Fig. 7 illustriert. Hier wird unpolarisiertes Beobachtungslicht aus einer Lichtquelle 71 mit Hilfe einer Blende 72 von schräg oben auf die Deckschicht 3 eingestrahlt, und das durch die Deckschicht 3 transmittierte und von der Speicherschicht 2 reflektierte Beobachtungslicht wird mit dem Auge oder mit einem Detektor beobachtet (hier durch ein Auge 77 symbolisiert). Das eingestrahlte Beobachtungslicht hat dabei eine Intensität, die weit unter dem Schwellwert liegt, die für das Schreiben der Informationen benötigt wird. Dadurch verändert das Beobachtungslicht keine Daten in der Speicherschicht. Die Deckschicht 3 wirkt als Polarisationsfilter für das eintretende und austretende Beobachtungslicht. Durch die Deckschicht 3 tritt hauptsächlich Licht durch, das linear senkrecht zur Ausdehnungsrichtung der Linien der diffraktiven Struktur polarisiert ist. Dadurch sind nur diejenigen Informationen aus der Speicherschicht auslesbar, die zuvor mit derselben Polarisation eingeschrieben worden waren. Die restlichen Informationen sind nicht oder nur mit einem sehr viel geringeren Kontrast auslesbar; sie werden also durch die Deckschicht maskiert.

Statt in Reflexion kann die Beobachtung auch in Transmission erfolgen. Allerdings ist eine Beobachtung in Reflexion bevorzugt, weil dabei das Beobachtungslicht die Deckschicht 3 zweimal durchdringt. Dadurch wird die Polarisationsfilterwirkung der Deckschicht 3 erhöht.

Wenn die zweiten Flächenelemente 10 der Deckschicht 3 grösser als die ersten Flächenelemente (Pixel) 6 der Speicherschicht sind, werden beim Lesevorgang pro zweitem Flächenelement eine Mehrzahl von Bits je maskierter Polarisationsrichtung, bis hin zu mehreren kBits, in der ODS-Speicherschicht maskiert. Bei einer Pixelgröße von 10 Mikrometer, angenommen quadratischer Form, und einem, beispielsweise quadratischen, Polarisationsfilter mit 1 Millimeter Kantenlänge, greift der Lesevorgang z.B. auf 10 kBits einer Datenebene zu.

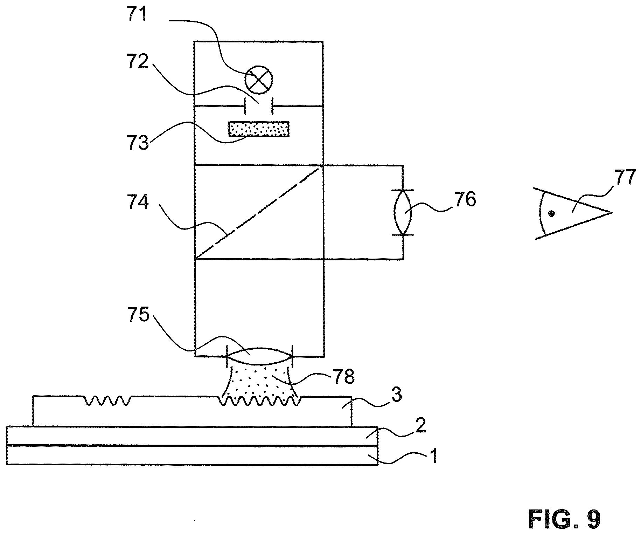

Sofern ein Bedarf besteht, auch die maskierten Datensätze in der ODS-Speicherschicht für den Betrachter zugänglich zu machen, kann durch das Anbringen einer benetzenden Flüssigkeit oder einem benetzenden Gel, beides jeweils mit einem Brechungsindex in der Nähe des Brechungsindexes der diffraktiv überprägten Deckschicht, die Wirkung der durch die Beprägung der Deckschicht erzeugten Polarisationsfilter aufgehoben werden. Dies ist in den Figuren 8 und 9 illustriert.

So ist in der Fig. 8 eine benetzende Ölschicht 7 (z.B. ein Immersionsöl, wie es aus der Mikroskopie bekannt ist) auf die Deckschicht 3 aufgetragen und mit einem Deckplättchen 8 bedeckt. Durch das Auftragen des Öls auf die Deckschicht wird die Wirkung der durch die Beprägung der Deckschicht erzeugten Polarisationsfilter aufgehoben, so dass alle Informationen der BR-ODS-Schicht wieder auslesbar sind. In anderen Worten wird die Wirkung der überprägten, diffraktiven Strukturen durch ein Medium mit ähnlichem Brechungsindex wie die Deckschicht aufgehoben, so dass die überprägten, diffraktiven Strukturen wirkungslos und alle Bits pro Flächenelement wieder auslesbar sind. Zum Auslesen der einzelnen Bits wird nun ein drehbarer oder sonstwie bezüglich seiner Polarisationsrichtung einstellbarer Polarisatonsfilter 73 verwendet. Dieser polarisiert das Beobachtungslicht linear. Dadurch werden nun nur diejenigen Bits ausgelesen, die zur Polarisationsrichtung des Beobachtungslichtes passen. Statt das Beobachtungslicht bei der Beleuchtung zu polarisieren, kann auch unpolarisiertes Beobachtungslicht eingestrahlt werden und ein Polarisationsfilter auf der Seite des Beobachters eingesetzt werden.

Eine zweite Möglichkeit für die Beobachtung ist in der Fig. 9 illustriert. Hier wird Beobachtungslicht von einer Lichtquelle 71 durch einen nicht dargestellten Diffusor, eine Blende 72 und einen Polarisationsfilter 73 auf einen Strahlteiler 74 geleitet, von wo es durch eine als Objektiv dienende Immersionslinse 75 ohne Luftspalt direkt in ein benetzendes Immersionsöl 78 und von dort über die Deckschicht 3 in die Speicherschicht 2 gelangt. Das reflektierte Licht gelangt durch die Deckschicht 3, das Immersionsöl 78 und die Linse 75 hindurch zurück in den Strahlteiler 74, von wo es über eine als Okular dienende Austrittslinse 76 zum Detektor oder Auge des Beobachters gelangt.

Weitere Details zum möglichen Aufbau eines Lesegerätes, das für verschiedene Datenebenen geeignet ist, sind zum Beispiel in der Dissertation von Martin Imhof, a.a.O., beschrieben.

Für das hier vorgestellte Verfahren ist es unerheblich, ob die datentragende Speicherschicht unmittelbar auf dem Träger (Substrat) der Endanwendung oder auf einer sich auf dem Träger befindenden Zwischenschicht angeordnet ist.

Die als Speicherschicht verwendete ODS-Schicht kann entsprechend der in der DE 101 63 428 A1 oder der in der Dissertation Martin Imhof, a.a.O., beschriebenen Schicht aufgebaut sein oder eine mit acti-LOR-Siebdruckfarbe auf das Substrat oder mit einer sonstigen geeigneten Zubereitung gedruckte oder sonstwie aufgebrachte Schicht sein. Bei der Deckschicht handelt es sich bevorzugt um einen Decklack, wie er zum Einprägen diffraktiver Strukturen verwendet wird, z.B., um kationisch härtbaren UV-Lack, welcher nicht vollständig durch UV-Licht gehärtet und damit noch weich und prägbar ist, und nach der Beprägung durch Dunkelreaktion weiter reagiert und von selber voll durchhärtet wird. Alternativ kann radikalisch härtender UV-Lack verwendet werden, welcher nach der Beprägung durch einen nachgelagerten zweiten UV-Härtungsschritt vollständig durchhärtet wird. Ferner kann ein physikalisch trocknender Lösungsmittel-Lack (auch Wasser als Lösungsmittel) vor vollständigem Verdampfen des Lösungsmittels beprägt werden, und nach der Beprägung durch nachgelagertes, vollständiges Abdampfen des Lösungsmittels durchhärtet werden.

Um diffraktive Strukturen in die Deckschicht zu prägen, können Prägestempel verwendet werden. Diese Prägestempel sind mechanische Einheiten, wie beispielsweise die Typen einer Schreibmaschine, eines Nummerierwerkes einer Druckmaschine oder, in einer extremen Ausführungsform, die Fläche einer Nadelspitze eines Nadeldruckers. Die repetitive Struktur im Prägestempel, die als Matrize für die diffraktive, polarisierende Struktur in der Deckschicht dient, kann beispielsweise durch Laserablation erzeugt werden. Es sind aber auch andere Verfahren denkbar.

Es sind auch Kombinationen von klassischen, visuell erkennbaren Merkmalen, wie z. B. Schriftzügen von Personennamen oder zweidimensionale Barcodes, mit dem vorgeschlagenen Auslesen von polarisationsorientierten ODS-Speicherschicht denkbar, indem die Form der Prägestempel beispielsweise die Form eines Buchstabens eines Schriftzuges erhalten oder selbst Form und Funktion eines zweidimensionalen Barcodes erhalten.

Auch ist es z.B. denkbar, einen ersten Datensatz als Personaldaten in Textform mit einer ersten Polarisationsrichtung in der Speicherschicht zu speichern, einen zweiten Datensatz als kryptografischen Schlüssel mit einer zweiten Polarisationsrichtung in der Speicherschicht zu hinterlegen, und einen dritten Datensatz als Bilddaten und einen vierten Datensatz als Metadaten zu den Bilddaten mit weiteren Polarisationsrichtungen in der Speicherschicht abzulegen. Es ist in der Praxis sinnvoll, auf unterschiedlichen Regionen des Dokumentes bzw. Datenträgers mit nicht polarisiertem Licht auf einfache Weise bestimmte Datenkombinationen abzufragen, beispielsweise Personaldaten eines Dokumenteninhabers an einer Stelle des Dokumentes, Bilddaten an einer anderen Stelle, Metadaten zum Bild, beispielsweise Aufnahmedatum und Aufnahmeort sowie einen Schlüssel zum Lesen der Personaldaten an anderen Orten eines Identitätsdokumentes.

Anwendung findet ein solcher Datenträger vor allem bei Wertdokumenten sowie Substraten, aus welchen Wertdokumente hergestellt werden und somit eine Vorstufe zum eigentlichen Wertdokument darstellen. Wertdokumente im Sinne dieser Erfindung sind Pässe, Ausweise, ID-Dokumente, Urkunden, Aktien, Scheck-Formulare, Banknoten sowie Etiketten zur Sicherung von Produkten vor Fälschung oder Verfälschung sowie durch Fälschung oder Verfälschung gefährdete Gegenstände aller Art wie Pharma-Verpackungen, Verpackungen für Kosmetika oder Eintrittskarten usw.

**Patentansprüche**

1. Datenträger, aufweisend:

   eine Speicherschicht (2); und
   eine transparente oder transluzente Deckschicht (3), die über der Speicherschicht (2) angeordnet ist, wobei die Deckschicht (3) eine Mehrzahl von jeweils als Polarisationsfilter für eine vorbestimmte Polarisationsrichtung wirkenden zweiten Flächenelementen (10) bildet, wobei die vorbestimmte Polarisationsrichtung zwischen den zweiten Flächenelementen (10) räumlich variiert,
   **dadurch gekennzeichnet,**
   **dass** die Speicherschicht (2) eine Mehrzahl von ersten Flächenelementen (6) bildet, wobei die Speicherschicht (2) mindestens eine optische Eigenschaft aufweist, die optisch anisotrop in die Speicherschicht eingeprägt ist und die zwischen den ersten Flächenelementen (6) derart räumlich variiert, dass die räumliche Variation der optischen Eigenschaft für eine erste Richtung der Anisotropie einen ersten Datensatz definiert, der mit Licht einer ersten Polarisationsrichtung auslesbar ist, aber mit Licht mindestens einer weiteren Polarisationsrichtung nicht auslesbar ist,
   **dass** die zweiten Flächenelemente (10) über den ersten Flächenelementen (6) angeordnet sind, und

**dass** die vorbestimmte Polarisationsrichtung der zweiten Flächenelemente (10) derart räumlich variiert, dass ein Teil des ersten Datensatzes durch die Deckschicht (3) maskiert ist.

2.  Datenträger nach Anspruch 1, wobei die zweiten Flächenelemente (10) diffraktive Strukturen (9) aufweisen, die so ausgebildet sind, dass sie Licht optisch anisotrop durchlassen bzw. reflektieren.

3.  Datenträger nach Anspruch 2, wobei die diffraktiven Strukturen (9) durch Prägung in die Deckschicht eingebracht sind.

4.  Datenträger nach einem der vorhergehenden Ansprüche, wobei die räumliche Variation der optischen Eigenschaft zwischen den ersten Flächenelementen (6) für eine Zahl $p > 1$ verschiedener Richtungen der Anisotropie jeweils einen Datensatz in Form einer Folge von Bits definiert, so dass in jedem der ersten Flächenelemente $p$ Bits gespeichert sind, wobei jedes dieser Bits mit Licht jeweils einer zugeordneten Polarisationsrichtung auslesbar ist, und wobei die Polarisationsrichtung der zweiten Flächenelemente (10) derart zwischen den zweiten Flächenelementen variiert, dass für jedes der ersten Flächenelemente (6) eines der darin gespeicherten Bits durch die Deckschicht (3) hindurch optisch auslesbar ist, während die anderen Bits durch die Deckschicht (3) maskiert sind.

5.  Datenträger nach Anspruch 4, wobei die zweiten Flächenelemente (10) geometrisch eine $p$-zählige Symmetrie aufweisen.

6.  Datenträger nach einem der vorhergehenden Ansprüche, wobei jedes der ersten Flächenelemente (6) von genau einem zweiten Flächenelement (10) überdeckt ist.

7.  Datenträger nach einem der vorhergehenden Ansprüche, wobei die Speicherschicht ein Pigment enthält, in dem die optische anisotrope Eigenschaft durch Beleuchtung mit polarisiertem Schreiblicht erzeugbar ist.

8.  Datenträger nach einem der vorhergehenden Ansprüche, wobei die Speicherschicht (2) Bakteriorhodopsin in Form einer Purpurmembran aufweist, und wobei die Purpurmembran in der Speicherschicht (2) immobilisiert ist.

9.  Verfahren zur Herstellung eines Datenträgers, aufweisend:

    Bereitstellen einer Speicherschicht (2), die mindestens eine durch Lichteinwirkung anisotrop veränderbare optische Eigenschaft aufweist;

    Einspeichern von Daten in die Speicherschicht (2) durch Belichten von ersten Flächenelementen (6) der Speicherschicht (2) mit polarisiertem Schreiblicht, wobei die genannte optische Eigenschaft entsprechend den einzuspeichernden Daten derart verändert wird, dass die optische Eigenschaft zwischen den ersten Flächenelementen (6) räumlich variiert und zumindest in einem Teil der ersten Flächenelemente (6) optisch anisotrop ist, wobei die räumliche Variation der optischen Eigenschaft zwischen den ersten Flächenelementen (6) für eine erste Polarisationsrichtung des Schreiblichts einen ersten Datensatz definiert, der mit Leselicht der ersten Polarisationsrichtung auslesbar ist, aber mit Leselicht mindestens einer weiteren Polarisationsrichtung nicht auslesbar ist; und

    Erzeugen einer transparenten oder transluzenten Deckschicht (3) auf der Speicherschicht, wobei die Deckschicht (3) eine Mehrzahl von als Polarisationsfilter für eine vorbestimmte Polarisationsrichtung wirkenden zweiten Flächenelementen (10) aufweist, die über den ersten Flächenelementen (6) angeordnet sind, und wobei die vorbestimmte Polarisationsrichtung zwischen den zweiten Flächenelementen (10) derart räumlich variiert, dass ein Teil des ersten Datensatzes durch die Deckschicht (3) maskiert ist.

10. Verfahren nach Anspruch 9, wobei das Erzeugen der transparenten oder transluzenten Deckschicht (3) umfasst:

    Aufbringen der Deckschicht (3) in noch unbeprägter Form auf die Speicherschicht (2) vor oder nach dem Einspeichern der Daten; und Einprägen von diffraktiven Strukturen (9) in die Deckschicht (3), um die als Polarisationsfilter wirkenden zweiten Flächenelemente (10) zu erzeugen, wobei die diffraktiven Strukturen (9) so ausgebildet werden, dass sie Licht polarisationsabhängig durchlassen bzw. reflektieren.

11. Verfahren zum Auslesen eines Datenträgers nach einem der Ansprüche 1-8, welches aufweist:

    Beleuchten des Datenträgers (1) mit unpolarisiertem Beobachtungslicht;
    Beobachten des durch die Deckschicht (3) hindurch von der Speicherschicht (2) reflektierten oder durch die Speicherschicht (2) und die Deckschicht (3) transmittierten Beobachtungslichts, um einen durch die vorbestimmte Polarisationsrichtung der zweiten Flächenelemente (10) vorgegebenen Teil der Daten auszulesen.

12. Verfahren zum Auslesen eines Datenträgers nach einem der Ansprüche 1-8, welches aufweist:

Aufbringen eines Mediums (7), welches einen ähnlichen Brechungsindex wie die Deckschicht (3) aufweist, auf die Deckschicht (3);
Beleuchten der Speicherschicht (2) mit Beobachtungslicht;
Detektieren des durch die Deckschicht (3) und das Medium (7) hindurch von der Speicherschicht (2) reflektierten oder des durch die Speicherschicht (2), die Deckschicht (3) und das Medium (7) transmittierten Beobachtungslichts, wobei das Beleuchten und/oder das Detektieren polarisationsselektiv erfolgt.

## Claims

1. A data carrier, comprising:

    a storage layer (2) and
    a transparent or translucent cover layer (3) which is arranged above the storage layer (2), wherein the cover layer (3) forms a plurality of second surface elements (10) which act in each case as a polarization filter for a predetermined polarization direction, wherein the predetermined polarization direction spatially varies between the second surface elements (10), **characterized in that** the storage layer (2) forms a plurality of first surface elements (6), wherein the storage layer (2) has at least one optical property which is provided optically anisotropically in the storage layer and which spatially varies between the first surface elements (6) such that the spatial variation of the optical property for a first direction of the anisotropy defines a first data set which is readable using light having a first polarization direction, but is not readable using light having at least one further polarization direction, **in that** the second surface elements (10) are arranged above the first surface elements (6), and **in that** the predetermined polarization direction of the second surface elements (10) spatially varies such that part of the first data set is masked by the cover layer (3).

2. The data carrier according to Claim 1, wherein the second surface elements (10) have diffractive structures (9) which are configured such that they optically anisotropically transmit or reflect light.

3. The data carrier according to Claim 2, wherein the diffractive structures (9) are introduced into the cover layer by way of embossing.

4. The data carrier according to any one of the preceding claims, wherein the spatial variation of the optical property between the first surface elements (6) for a number $p > 1$ of different directions of the anisotropy defines in each case one data set in the form of a sequence of bits, such that in each of the first surface elements, $p$ bits are stored, wherein each of these bits is readable using light having in each case a matching polarization direction, and wherein the polarization direction of the second surface elements (10) varies between the second surface elements such that for each of the first surface elements (6), one of the bits stored therein is optically readable through the cover layer (3), while the other bits are masked by the cover layer (3).

5. The data carrier according to Claim 4, wherein the second surface elements (10) geometrically have a $p$-fold symmetry.

6. The data carrier according to any one of the preceding claims, wherein each of the first surface elements (6) is covered by exactly one second surface element (10).

7. The data carrier according to any one of the preceding claims, wherein the storage layer contains a pigment in which the optically anisotropic property is producible by illumination with polarized writing light.

8. The data carrier according to any one of the preceding claims, wherein the storage layer (2) comprises bacteriorhodopsin in the form of a purple membrane, and wherein the purple membrane is immobilized in the storage layer (2).

9. A method for producing a data carrier, comprising:

    providing a storage layer (2), which has at least one optical property that is capable of being altered anisotropically through the action of light; storing data into the storage layer (2) by way of exposing first surface elements (6) of the storage layer (2) to polarized writing light, wherein said optical property is altered according to the data to be stored such that the optical property spatially varies between the first surface elements (6) and is optically anisotropic at least in part of the first surface elements (6), wherein the spatial variation of the optical property between the first surface elements (6) for a first polarization direction of the writing light defines a first data set which is readable using reading light having the first polarization direction, but is not readable using reading light having at least one further polarization direction; and producing a transparent or translucent cover layer (3) on the storage layer, wherein the cover layer (3) has a plurality of second surface elements (10) which act as polarization filters for a predetermined polarization direction and which are arranged above the first surface elements (6), and wherein the predetermined polarization direction spatially varies between the second surface elements (10) such that part of the first data set is masked by the cover layer (3).

10. The method according to Claim 9, wherein producing the transparent or translucent cover layer (3) comprises:

applying the cover layer (3), in a form in which it has not yet been embossed, onto the storage layer (2) before or after storing of the data; and embossing diffractive structures (9) into the cover layer (3) so as to produce the second surface elements (10) which act as polarization filters, wherein the diffractive structures (9) are formed such that they transmit or reflect light depending on the polarization.

11. A method for reading a data carrier according to any one of Claims 1-8, including:

illuminating the data carrier (1) with unpolarized observation light; observing the observation light, which is reflected by the storage layer (2) or is transmitted by the storage layer (2) and the cover layer (3), through the cover layer (3) in order to read a part of the data that is specified by the predetermined polarization direction of the second surface elements (10).

12. A method for reading a data carrier according to any one of Claims 1-8, including:

applying a medium (7), which has a similar refractive index to the cover layer (3), onto the cover layer (3); illuminating the storage layer (2) with observation light; detecting the observation light which is reflected by the storage layer (2) through the cover layer (3) and the medium (7), or the observation light which is transmitted by the storage layer (2), the cover layer (3) and the medium (7), wherein illuminating and/or detecting is effected in a polarization-selective manner.

## Revendications

1. Un support de données comportant :

une couche de mémoire (2) ; et une couche de recouvrement (3) transparente ou translucide disposée au-dessus de la couche de mémoire (2), où la couche de recouvrement (3) forme une pluralité de deuxièmes éléments de surface (10) qui agissent respectivement comme filtres de polarisation pour une direction de polarisation prédéfinie, où la direction de polarisation prédéfinie varie dans l'espace entre les deuxièmes éléments de surface (10),

**caractérisé en ce que**

la couche de mémoire (2) forme une pluralité de premiers éléments de surface (6), où la couche de mémoire (2) présente au moins une propriété optique qui est gravée dans la couche de mémoire de manière optiquement anisotrope et qui varie dans l'espace entre les premiers éléments de surface (6) de telle sorte que la variation dans l'espace de la propriété optique définit un premier ensemble de données pour une première direction de l'anisotropie, qui peut être lu avec de la lumière ayant une première direction de polarisation, mais qui ne peut pas être lu avec de la lumière ayant au moins une direction de polarisation autre,

les deuxièmes éléments de surface (10) sont disposés au-dessus des premiers éléments de surface (6), et

la direction de polarisation prédéfinie des deuxièmes éléments de surface (10) varie dans l'espace de telle sorte qu'une partie du premier ensemble de données est masquée par la couche de recouvrement (3).

2. Un support de données selon la revendication 1, où les deuxièmes éléments de surface (10) présentent des structures diffractives (9), formées de telle sorte qu'elles laissent passer, respectivement reflètent, de la lumière de manière optiquement anisotrope.

3. Un support de données selon la revendication 2, où les structures diffractives (9) sont formées dans la couche de recouvrement par frappage.

4. Un support de données selon une des revendications précédentes, où la variation dans l'espace de la propriété optique entre les premiers éléments de surface (6) définit respectivement, pour un nombre p> 1 de différentes directions d'anisotropie, un ensemble de données en forme de séquence de bits, de sorte que dans chacun des premiers éléments de surface p bits sont enregistrés, où chacun de ces bits peut être lu avec de la lumière ayant respectivement une direction de polarisation attribuée, et où la direction de polarisation des deuxièmes éléments de surface (10) varie entre les deuxièmes éléments de surface de telle sorte que pour chacun des premiers éléments de surface (6), un des bits enregistrés dans ceux-ci peut être lu à travers la couche de recouvrement (3) de manière optique, tandis que les autres bits sont masqués par la couche de recouvrement (3).

**5.** Un support de données selon la revendication 4, où les deuxièmes éléments de surface (10) présentent une symétrie p-tuple.

**6.** Un support de données selon une des revendications précédentes, où chacun des premiers éléments de surface (6) est couvert par exactement un deuxième élément de surface (10).

**7.** Un support de données selon une des revendications précédentes, où la couche de mémoire comprend un pigment, dans lequel la propriété optiquement anisotrope peut être produite par illumination avec une lumière d'inscription polarisée.

**8.** Un support de données selon une des revendications précédentes où la couche de mémoire (2) présente de la bactériorhodopsine en forme d'une membrane pourpre, et où la membrane pourpre est immobilisée dans la couche de mémoire (2).

**9.** Un procédé pour la production d'un support de données, comprenant:

fournir une couche de mémoire (2), laquelle présente au moins une propriété optique pouvant être modifiée de manière anisotrope sous l'action de lumière;

enregistrer des données dans la couche de mémoire (2) par exposition des premiers éléments de surface (6) de la couche de mémoire (2) à une lumière d'inscription polarisée, où ladite propriété optique est modifiée selon les données destinées à être enregistrées de telle sorte que la propriété optique entre les premiers éléments de surface (6) varie dans l'espace et est optiquement anisotrope au moins dans une partie des premiers éléments de surface (6), où la variation dans l'espace de la propriété optique entre les premiers éléments de surface (6) définit un premier ensemble de données pour une première direction de polarisation de la lumière d'inscription, qui peut être lu avec une lumière de lecture ayant la première direction de polarisation, mais ne peut pas être lu avec une lumière de lecture ayant au moins une direction de polarisation autre; et

créer une couche de recouvrement (3) transparente ou translucide au-dessus de la couche de mémoire, où la couche de recouvrement (3) présente une pluralité de deuxièmes éléments de surface (10) qui agissent comme filtres de polarisation pour une direction de polarisation prédéfinie, qui sont disposés au-dessus des premiers éléments de surface (6), et où la direction de polarisation prédéfinie varie dans l'espaces entres les deuxièmes éléments de surface (10) de telle sorte qu'une partie du premier ensemble de données est masqué par la couche de recouvrement (3).

**10.** Un procédé selon la revendication 9, où la création de la couche de recouvrement (3) transparente ou translucide comprend:

déposer la couche de recouvrement (3) dans une forme encore non gravée sur la couche de mémoire (2) avant ou après l'enregistrement des données; et

graver des structures diffractives (9) dans la couche de recouvrement (3), pour produire les deuxièmes éléments de surface (10) qui agissent comme filtres de polarisation, où les structures diffractives (9) sont formées de telle sorte qu'elles laissent passer, respectivement reflètent, de la lumière en dépendance de la polarisation.

**11.** Un procédé pour la lecture d'un support de données selon une des revendications 1 à 8, lequel comprend :

illumination du support de données (1) avec une lumière d'observation non polarisée;

observer la lumière d'observation reflétée à travers la couche de recouvrement (3) par la couche de mémoire (2) ou transmise à travers la couche de mémoire (2) et la couche de recouvrement (3), pour lire une partie des données prédéterminée par la direction de polarisation prédéterminée des deuxièmes éléments de surface (10).

**12.** Un procédé pour la lecture d'un support de données selon une des revendications 1 à 8, lequel comprend :

déposer un milieu (7), présentant un index de réfraction similaire à la couche de recouvrement (3), sur la couche de recouvrement (3) ;

illuminer la couche de mémoire (2) avec une lumière d'observation;

détecter la lumière d'observation reflétée à travers la couche de recouvrement (3) et le milieu (7) par la couche de mémoire (2) ou transmise à travers la couche de mémoire (2), la couche de recouvrement(3) et le milieu (7), où l'illumination et/ou la détection est effectuée de manière sélective par rapport à la polarisation.

**FIG. 1**

**FIG. 2**

**FIG. 3**

**FIG. 4**

EP 3 012 784 B1

**FIG. 5**

**FIG. 6**

19

FIG. 7

FIG. 8

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0406850 A
- EP 0487099 A
- EP 0655162 A
- EP 0532029 A
- EP 1171309 A
- EP 1459301 A
- DE 10163428 A1
- DE 19831777 A1
- DE 102007044486 A1
- WO 2004009373 A1
- EP 1767988 A1
- WO 2010124908 A

**In der Beschreibung aufgeführte Nicht-Patentliteratur**

- **T. FISCHER ; M. NEEBE ; T- JUCHEM ; N. HAMPP.** Biomolecular optical data storage and data encryption. *IEEE Transactions on NanoBiosciences,* 2003, vol. 2, 1-5
- **MARTIN IMHOF.** Polarisationsdatenspeicherung in Bakteriorhodopsin-Schichten. Dissertation Universität Marburg, 2012
- **W. D. KOEK ; N. BHATTACHARYA ; J. J. M. BRAAT ; V. S. S. CHAN ; J. WESTERWEEL.** *Optics Letters,* 2004, vol. 29 (1), 101-103